# FASCICULE DE BREVET EUROPEEN

(11) **EP 1 517 052 B1**
(45) Date de publication et mention de la délivrance du brevet: **08.12.2010**
(21) Numéro de dépôt: 04291145.3
(22) Date de dépôt: 04.05.2004
(51) Int. Cl.: F16B 33/02

(54) **Dispositif pour la fixation par vissage d'un élément compressible sur un support**
Einrichtung zur Befestigung eines kompressiblen Elements mittels Schraubverbindung auf einen Träger
Device for fixation by screwing a compressible element to a support

(30) Priorité: 19.09.2003 FR 0311029
(43) Date de publication de la demande: 23.03.2005
(73) Titulaire: Ateliers LR Etanco, 78230 Le Pecq (FR)
(72) Inventeur: Leroy, Alain, 78820 Juziers (FR)
(74) Mandataire: de Saint-Palais, Arnaud Marie

(56) Documents cités:
- DE-U- 20 109 815
- FR-A- 2 793 534
- FR-A- 2 832 471
- GB-A- 2 142 108
- US-A- 5 707 191
- US-B1- 6 183 182

## Description

La présente invention concerne un dispositif pour la fixation par vissage d'un élément compressible sur un support.

Elle s'applique notamment, mais non exclusivement, à la fixation par vissage d'une membrane d'étanchéité recouvrant une garniture d'isolation réalisée en un matériau compressible, portée par un support rigide tel qu'un bac acier ou autre support rigide de couverture monté sur une charpente.

Usuellement, ce dispositif fait intervenir une plaquette par exemple en tôle d'acier, dont la partie centrale en forme de cuvette comprend un orifice central, sensiblement coaxial, servant pour le passage d'une vis.

Cette cuvette sert à contenir la tête de la vis une fois le vissage effectué, de manière à pouvoir assurer la continuité de l'étanchéité de la membrane au niveau de l'ensemble vis/plaquette en disposant sur l'ensemble une garniture d'étanchéité, par exemple une bande adhésive. Il est clair que la pose de cette garniture serait problématique si la tête de la vis dépassait en saillie de la plaquette.

Il s'avère que la présence de ce type de plaquettes pose de nombreux problèmes.

Ainsi, parallèlement à la pose, la vis doit être engagée dans l'orifice central de la plaquette jusqu'à ce que celle-ci se trouve disposée au voisinage de la tête de la vis.

De ce fait, lors de la pose, la plaquette doit rester engagée sur la vis, de préférence au niveau d'une partie lisse située au-dessus du filetage, de manière à ce que l'opérateur puisse effectuer le vissage sans risquer de perdre la plaquette ou même sans que la plaquette retombe sur la membrane d'étanchéité, en cours de vissage : Dans ce cas, la plaquette, entraînée en rotation par les filets de la vis, risquerait d'endommager la membrane.

Par ailleurs, il s'avère souhaitable qu'une fois le vissage effectué, la plaquette ne puisse pas coulisser vers la pointe lorsqu'elle est soumise à un effort tendant à comprimer la garniture d'isolation (par exemple lorsqu'un opérateur marche sur la membrane d'étanchéité). Dans ce cas, l'ensemble plaquette/membrane s'enfonce localement tandis que la tête de la vis vient en saillie au-dessus de la plaquette. La garniture d'étanchéité risque alors d'être décollée de la membrane d'étanchéité, voire même perforée. Dans un cas comme dans l'autre, l'étanchéité de l'ensemble de la couverture se trouve compromise.

En outre, il est également souhaitable qu'en fin de vissage, la plaquette ne se dispose pas obliquement en raison de l'action du filetage de la vis (l'extrémité sous tête du filet s'étendant obliquement par rapport à l'axe de la vis), Il est clair qu'un mauvais positionnement de la plaquette est également de nature à compromettre l'étanchéité de l'ensemble.

Pour tenter de résoudre ces problèmes, on a proposé, notamment par le brevet FR 2 832 471 :
- d'une part, d'utiliser des vis présentant successivement, en partant de la pointe, un filetage de fixation, une partie lisse et un filetage sous tête de diamètre supérieure à celui du diamètre de fixation, et
- d'autre part, de réaliser dans la cuvette des fentes traversantes débouchant dans un orifice de passage de la vis dont le diamètre est inférieur au diamètre extérieur du filetage sous tête de la vis.

Grâce à ces dispositions, le coulissement de la plaquette le long de la tige de la vis, en direction de la tête, s'effectue sans difficulté, avec un effet de rochet au passage des filetages, l'action de la vis provoquant une déformation élastique des portions de cuvette délimitées par les fentes, tendant à accroître la section de passage de l'orifice,

Par contre, tout déplacement de la plaquette en direction de la pointe de la vis est ensuite rendu difficile du fait que, dans ce cas, la contrainte exercée par les filets de la vis tend à réduire la section de passage de l'orifice. On obtient donc un effet de blocage par cisaillement et, en conséquence, la plaquette, préalablement engagée sur la vis, ne peut pas s'ôter involontairement lors des opérations de pose. Ce processus de blocage est amplifié au niveau du filetage sous tête en raison du diamètre plus important des filets.

Toutefois, il s'avère que ce processus de blocage demeure limité en raison des propriétés d'élasticité des portions de cuvette délimitées par les fentes et du profil des filets de la vis.

En conséquence, au-delà d'un seuil d'effort exercé sur la plaquette en direction de la pointe, l'orifice s'agrandit légèrement et son bord échappe au filet de la vis qui le retenait précédemment. De ce fait, la plaquette coulisse en direction de la pointe de la vis tandis que la tête de la vis ressort de la cuvette. Comme précédemment mentionné, ceci se produit notamment lorsque, après avoir fixé une membrane d'étanchéité sur un revêtement d'isolation au moyen d'ensembles vis/plaquette, l'opérateur marche sur le revêtement.

Par le brevet US 6 183 182, on a également proposé une solution prévoyant, entre le filetage de plus grand diamètre et la tête de la vis, une portion non filetée dans laquelle l'orifice de la plaquette éventuellement prolongé par une cheminée vient s'engager en fin de vissage. Dans cette position, la plaquette n'est plus en prise avec le filetage et peut donc rotuler. Dans ce cas, l'orifice est sujet à une ovalisation de sorte que l'on tombe alors sous le coup des problèmes précédemment évoqués,

L'invention a donc tout d'abord pour but de supprimer ces inconvénients.

Elle propose, à cet effet, un dispositif faisant intervenir, d'une part, une vis comprenant successivement, une tête et une tige comportant un filetage sous tête, une partie lisse, un filetage de fixation, de diamètre inférieur au filetage sous tête, terminé par une pointe et, d'autre part, une plaquette comprenant une conformation en forme de cuvette au centre de laquelle est réalisé un orifice traversant permettant le passage de ladite vis, cet orifice étant prolongé par une cheminée cylindrique, avec un diamètre intérieur inférieur au diamètre extérieur du filetage sous tête.

Selon l'invention, ce dispositif est caractérisé en ce que la cheminée cylindrique possède un diamètre intérieur légèrement supérieur au diamètre extérieur du filetage de fixation de la vis et comprend un sertissage sur le filetage de fixation ou sur la partie lisse de la vis.

Grâce à cette disposition, en fin de vissage, le filetage sous tête "tiré" par le filetage de fixation vient se visser par un processus d'autotaraudage dans la cheminée en assurant une fixation efficace entre la vis et la plaquette.

Le prémontage de la platine sur la vis pourra s'effectuer en usine ou in situ.

Dans le cas d'un prémontage en usine, celui-ci pourra comprendre l'engagement de la vis au travers de l'orifice de la platine puis un sertissage de la cheminée sur la vis. Ce sertissage pourra être effectué sur le filetage de fixation ou sur la partie lisse, selon la longueur de la vis.

Dans le cas d'un prémontage in situ, l'opérateur se limitera à l'engagement de la vis dans l'orifice : le maintien de la platine sur la vis résulte du fait que le diamètre intérieur de la cheminée est très voisin du diamètre extérieur du filetage et, qu'en conséquence, la moindre inclinaison de la platine par rapport à l'axe de la vis engendre un processus de blocage entre les deux pièces.

Un mode d'exécution de l'invention sera décrit ci-après, à titre d'exemple non limitatif, avec référence aux dessins annexés dans lesquels :
La figure 1 est une coupe schématique illustrant le principe de la fixation d'une membrane d'étanchéité recouvrant une garniture d'isolation portée par un bac acier de couverture ;
La figure 2 est une vue en perspective d'une plaquette ;
Les figures 3 et 4 sont des vues à plus grande échelle de la plaquette représentée figure 2, vue de dessus (figure 3) et en coupe selon AA' de la figure 2 (figure 4) ;
Les figures 5 et 6 sont des coupes axiales d'un ensemble vis/plaquette avec des plaquettes disposées à différents niveaux de la vis ;
Les figures 7 et 8 sont des vues respectivement en perspective (figure 7) et en coupe axiale (figure 8) d'une plaquette de forme générale carrée ;
La figure 9 est une représentation schématique illustrant un mode de sertissage de la cheminée d'une plaquette sur une vis.

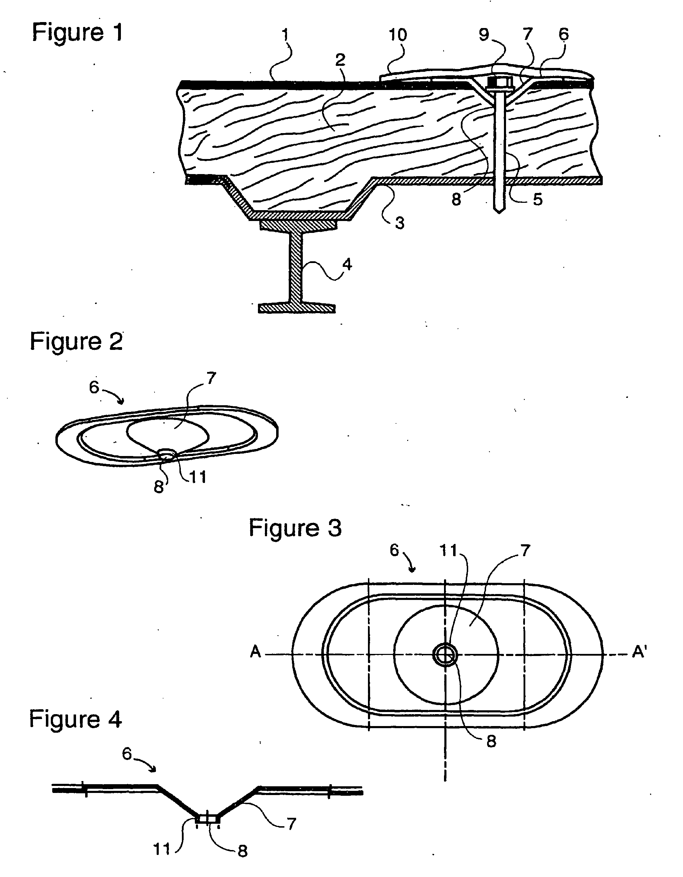

La figure 1 montre un exemple de fixation de la membrane d'étanchéité 1 sur un revêtement d'isolation 2 posé sur des bacs aciers 3 portés par les poutres 4 d'une charpente. Cette fixation s'effectue au moyen de vis 5, de préférence autoperforantes et/ou autotaraudeuses, équipées de rondelles ou de plaquettes 6.

Ces rondelles ou plaquettes 6 servent à transmettre sur l'ensemble membrane/garniture l'effort de serrage exercé par la vis. En conséquence, elles présentent des dimensions relativement importantes par rapport à la tête de la vis.

Dans l'exemple représenté figures 2 à 4, ces plaquettes 6 présentent une forme rectangulaire et comprennent dans leur partie centrale un embouti en forme de cuvette 7 muni d'un orifice central 8 par lequel passe la tige de la vis 5. Cette cuvette 7 sert à loger la tête 9 de la vis 5 de manière à permettre la fixation d'une bande de recouvrement 10, recouvrant les plaquettes 6 et assurant ainsi la continuité de l'étanchéité assurée par la membrane 1 au niveau des plaquettes 6.

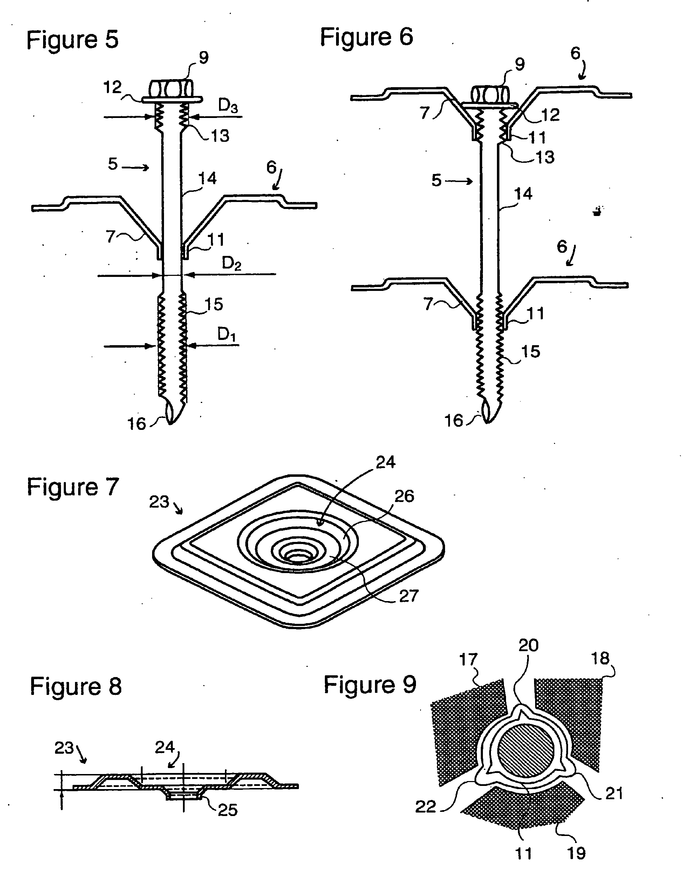

Conformément à l'invention, la plaquette 6 est prolongée, autour de l'orifice 8, par une cheminée cylindrique 11 par laquelle peut passer une vis de fixation 5, par exemple du type de celle illustrée sur les figures 5 et 6, qui comprend successivement :
- une tête 9 (ici à base hexagonale) suivie d'une collerette inférieure circulaire 12,
- un premier filetage sous tête 13 autotaraudeur,
- une partie lisse 14,
- un deuxième filetage autotaraudeur 15 appelé filetage de fixation, et
- une extrémité pointue autoperforante 16.

Comme indiqué sur la figure 5, le filetage de fixation 15 présente un diamètre extérieur théorique D₁ (par exemple égal à 4,8 mm) et un diamètre réel (par exemple égal à 4,7 mm), la partie lisse 14 présente un diamètre D₂ inférieur au diamètre D₁ du filetage de fixation 15 (par exemple égal à 3,9 mm) tandis que le filetage sous tête 13 présente un diamètre D₃ supérieur au diamètre D₁ du filetage de fixation 15 (par exemple égal à 5,2 mm).

Le diamètre intérieur de la cheminée 11 est légèrement supérieur au diamètre réel du filetage de fixation 15. Il est, de préférence, compris entre le diamètre théorique et le diamètre réel de ce filetage 15.

Grâce à ces dispositions, il est possible d'effectuer un prémontage manuel de la plaquette 6 sur la vis 5 à condition de disposer la vis 5 sensiblement coaxialement à la cheminée 11, compte tenu de l'écart peu important entre le diamètre du filetage 15 et le diamètre intérieur de la cheminée 11.

Une fois engagée sur le filetage 15, la plaquette 6 s'y maintient spontanément. En effet, en raison de leur forme hélicoïdale, les filets engendrent sur la cheminée 11 une force de frottement qui tend à incliner l'axe de la cheminée 11 par rapport à l'axe de la vis 5. On obtient donc un processus d'autoblocage qui s'avère suffisant pour le maintien de la plaquette 6, lors de l'opération de pose.

Toutefois, ce processus d'autoblocage peut être insuffisamment efficace dans le cas où l'ensemble vis 5/plaquette 6 doit subir de nombreuses manipulations préalablement à son utilisation (transport, conditionnement...).

C'est la raison pour laquelle dans le cas d'un prémontage en usine, il est souhaitable d'effectuer un sertissage de la cheminée 11 sur la vis 5 de manière à interdire toute possibilité de coulissement de la plaquette le long du filetage 15 de la vis 5 sans effectuer un mouvement de rotation relatif de la vis 5 et de la plaquette 6.

Comme indiqué sur la figure 9, ce sertissage peut être obtenu par serrage de l'extrémité de la cheminée 11 au moyen d'un appareil de sertissage comprenant trois mors 17, 18, 19 disposés à 120° l'un de l'autre autour de la cheminée 11 et qui sont écartés les uns des autres d'une distance prédéterminée.

Compte tenu de cette structure, on obtient, après serrage, trois secteurs circulaires rabattus contre la vis 5, ces trois secteurs étant reliés les uns aux autres par trois protubérances respectives 20, 21, 22 radialement en saillie.

Ce sertissage peut être réalisé sur le filetage 15 de fixation ou sur la partie lisse 14 de la vis 5.

Dans tous les cas, en fin de vissage, le filetage sous tête 13 vient se visser dans la cheminée 11 grâce à ses propriétés d'autotaraudage jusqu'à ce que la collerette 12 de la tête 9 vienne en butée sur la surface intérieure de la cuvette 7 de la plaquette 6. La plaquette 6 se trouve alors fermement solidarisée à la vis 5 de sorte que lorsqu'un opérateur marche sur le revêtement, la plaquette 6 ne peut pas coulisser le long de la vis 5 en direction de la pointe 16. On évite ainsi que la tête 9 de la vis 5 ne puisse venir poinçonner la bande de recouvrement 10 des plaquettes 6 et ne crée des défauts d'étanchéité difficilement détectables.

Bien entendu, l'invention ne se limite pas à une forme particulière de plaquettes 6. Cette plaquette 6 pourrait présenter une forme carrée, voire même circulaire.

Les figures 7 et 8 montrent une plaquette 23 de forme carrée. Dans cet exemple, la cuvette 24 et la cheminée 25 s'étendent coaxialement selon un axe passant par le centre du carré. De même que dans l'exemple représenté sur les figures 2 à 4, les plaquettes 23 comprennent une bordure périphérique légèrement décalée en hauteur par rapport au plan principal de la plaquette 23.

En outre, la cuvette 24 pourra comprendre une partie incurvée 26 adjacente à la face supérieure de la plaquette 23 et un fond 27 sensiblement plat entourant la cheminée 25.

## Revendications

1. Dispositif pour la fixation par vissage d'une matière compressible sur une structure de support, ce dispositif faisant intervenir, d'une part, une vis (5) comprenant successivement, une tête (9) et une tige comportant un filetage sous tête (13), une partie lisse (14), un filetage de fixation (15), de diamètre inférieur au filetage sous tête, terminé par une pointe (16) et, d'autre part, une plaquette (6) comprenant une conformation en forme de cuvette (7) au centre de laquelle est réalisé un orifice traversant (8) permettant le passage de ladite vis (5), cet orifice étant prolongé par une cheminée cylindrique (11) avec un diamétre intérieur inférieur au diamètre extérieur du filetage sous tête, **caractérisé en ce que** la cheminée cylindrique (11) possède un diamètre intérieur légèrement supérieur au diamètre extérieur du filetage de fixation (15) de la vis (5) et comprend un sertissage sur le filetage de fixation (15) ou sur la partie lisse (14) de la vis (5).

2. Dispositif selon la revendication 1,
**caractérisé en ce que** le filetage sous tête (13) est autotaraudeur.

3. Dispositif selon l'une des revendications 1 et 2;
**caractérisé en ce que** la pointe (16) de la vis (5) est autoperforante.

4. Dispositif selon la revendication
**caractérisé en ce que** le sertissage sur la vis (5) est réalisé à l'aide de mors (17, 18, 19) entourant la cheminée (11) et écartés les uns des autres d'une distance prédéterminée de manière à obtenir après serrage de ces mors une cheminée présentant une succession de secteurs reliés les uns aux autres par des protubérances radialement en saillie (20, 21, 22).

5. Dispositif selon l'une des revendications précédentes,
**caractérisé en ce que** le diamètre intérieur de la cheminée (11) est compris entre le diamètre réel du filetage de fixation et le diamètre théorique de ce filetage.

6. Dispositif selon l'une des revendications précédentes,
**caractérisé en ce que** la susdite plaquette présente une forme générale rectangulaire, carrée, voire même circulaire.

7. Dispositif selon l'une des revendications précédentes,
**caractérisé en ce que** la susdite plaquette (6) comprend une bordure périphérique légèrement décalée en hauteur par rapport au plan principal de la plaquette.

8. Dispositif selon l'une des revendications précédentes,
**caractérisé en ce que** la cuvette (24) comprend une partie incurvée (26) adjacente à la face supérieure de la plaquette et un fond sensiblement plat entourant la susdite cheminée (25).

## Claims

1. A device for fastening by screwing a compressible element to a support structure, said device using, on one hand, a screw (5) successively comprising a head (9) and a shaft including an under-head threading (13), a smooth portion (14), a fastening threading (15), with a diameter smaller than the under-head threading, ending with a tip (16) and, on the other hand, a plate (6) comprising a cup-shaped configuration (7) at the center of which a through orifice (8) is made allowing the passage of said screw (5), said orifice being extended by a cylindrical shaft (11) having an inner diameter smaller than the outer diameter of the under-head threading,
**characterized in that** the cylindrical shaft (11) has an inner diameter slightly larger than the outer diameter of the fastening threading (15) of the screw (5) and comprises a crimping on the fastening threading (15) or on the smooth portion (14) of the screw (5).

2. The device according to claim 1,
**characterized in that** the under-head threading (13) is self-tapping.

3. The device according to one of claims 1 and 2,
**characterized in that** the tip (16) of the screw (5) is self-piercing.

4. The device according to claim 1,
**characterized in that** the crimping on the screw (5) is done using grips (17, 18, 19) surrounding the shaft (11) and separated from each other by a predetermined distance so as to obtain, after squeezing said grips, a shaft having a succession of sectors connected to each other by radially protruding protuberances (20, 21, 22)

5. The device according to one of the preceding claims,
**characterized in that** the inner diameter of the shaft (11) is between the actual diameter of the fastening threading and the theoretical diameter of said threading.

6. The device according to one of the preceding claims,
**characterized in that** the aforementioned plate has a generally rectangular, square, or even circular shape.

7. The device according to one of the preceding claims,
**characterized in that** the aforementioned plate (6) comprises a peripheral edging slightly offset in height in relation to the main plane of the plate.

8. The device according to one of the preceding claims,
**characterized in that** the cup (24) comprises a curved portion (26) adjacent to the upper face of the plate and a substantially flat bottom surrounding said shaft (25).

## Patentansprüche

1. Vorrichtung zur Schraubbefestigung eines komprimierbaren Materials auf einer Trägerstruktur, wobei diese Vorrichtung einerseits eine Schraube (5), die nacheinander einen Kopf (9) und eine ein Unterkopfgewinde (13), einen glatten Teil (14), ein Befestigungsgewinde (15) mit einem geringeren Durchmesser als das Unterkopfgewinde, das in einer Spitze (16) endet, aufweisende Stange enthält, und andererseits ein Plättchen (6) verwendet, das eine schalenförmige (7) Gestaltung aufweist, in deren Mitte eine Durchgangsöffnung (8) ausgeführt ist, die den Durchgang der Schraube (5) erlaubt, wobei diese Öffnung durch einen zylindrischen Schacht (11) mit einem geringeren Innendurchmesser als der Außendurchmesser des Unterkopfgewindes verlängert wird, **dadurch gekennzeichnet, dass** der zylindrische Schacht (11) einen Innendurchmesser besitzt, der geringfügig größer als der Außendurchmesser des Befestigungsgewindes (15) der Schraube (5) ist, und eine Quetschverbindung auf dem Befestigungsgewinde (15) oder auf dem glatten Teil (14) der Schraube (5) enthält.

2. Vorrichtung nach Anspruch 1, **dadurch gekennzeichnet, dass** das Unterkopfgewinde (13) selbstschneidend ist.

3. Vorrichtung nach einem der Ansprüche 1 und 2, **dadurch gekennzeichnet, dass** die Spitze (16) der Schraube (5) selbstperforierend ist.

4. Vorrichtung nach Anspruch 1, **dadurch gekennzeichnet, dass** die Quetschverbindung auf der Schraube (5) mit Hilfe von Backen (17, 18, 19) durchgeführt wird, die den Schacht (11) umgeben und einen vorbestimmten Abstand zueinander haben, um nach dem Spannen dieser Backen einen Schacht zu erhalten, der eine Folge von Sektoren aufweist, die miteinander durch radial vorstehende Ausbauchungen (20, 21, 22) verbunden sind.

5. Vorrichtung nach einem der vorhergehenden Ansprüche, **dadurch gekennzeichnet, dass** der Innendurchmesser des Schachts (11) zwischen dem realen Durchmesser des Befestigungsgewindes und dem theoretischen Durchmesser dieses Gewindes liegt.

6. Vorrichtung nach einem der vorhergehenden Ansprüche, **dadurch gekennzeichnet, dass** das Plättchen eine allgemein rechteckige, quadratische, sogar kreisförmige Form aufweist.

7. Vorrichtung nach einem der vorhergehenden Ansprüche, **dadurch gekennzeichnet, dass** das Plättchen (6) einen Umfangsrand enthält, der bezüglich der Hauptebene des Plättchens leicht höhenversetzt ist.

8. Vorrichtung nach einem der vorhergehenden Ansprüche, **dadurch gekennzeichnet, dass** die Schale (24) einen gekrümmten Teil (26), der der Oberseite des Plättchens benachbart ist, und einen im Wesentlichen flachen Boden aufweist, der den Schacht (25) umgibt.
